# EUROPÄISCHE PATENTANMELDUNG

(11) **EP 4 785 802 A1**
(43) Veröffentlichungstag der Anmeldung: **05.08.2026**
(21) Anmeldenummer: 25154643.8
(22) Anmeldetag: 29.01.2025
(51) Int. Cl.: A23C 15/02, A23C 15/12

(54) **VERFAHREN ZUM AUFSCHMELZEN VON BUTTER**

(71) Anmelder: DMK Deutsches Milchkontor GmbH, 27404 Zeven (DE)
(72) Erfinder: WELZEL, Jens, 49638 Nortrup (DE)
(74) Vertreter: Soilan Rodriguez, Jose David

(57) **Zusammenfassung**

Vorgeschlagen wird ein Verfahren zum Aufschmelzen von Butter, umfassend oder bestehend aus den folgenden Schritten:
(a) Bereitstellen von ausgehärteter fester Butter in einem beheizbaren Gebinde
(b) Externes Beheizen des Bodens und/oder des Mantels des Gebindes und
(c) Abpumpen der sich am Boden des Gebindes bildenden flüssigen Phase und deren Rückführung in das Gebinde.

## Beschreibung

### GEBIET DER ERFINDUNG

Die vorliegende Erfindung befindet sich auf dem Gebiet der Buttertechnologie und betrifft ein Verfahren zum Aufschmelzen von Industriebutter in großen Gebinden, mit dem man in kurzen Zeiten und mit geringem technischem Aufwand ein homogenes und flüssiges Produkt erhält.

### TECHNOLOGISCHER HINTERGRUND

Industriebutter wird typisch in Barren von 25 kg an die Kunden geliefert. Jeder Barren ist verpackt und in Kartons abgepackt. Zur Verarbeitung muss jeder Barren einzeln ausgepackt und dann in einem Heizkessel aufgeschmolzen werden, was einen hohen Zeit- und Personalaufwand bedeutet.

Das Abpacken von Industriebutter in größere Gebinde von 1000-L scheitert an ihrer Härte: sie lässt sich nicht in das Gebinde füllen, ohne dass es zu Lufteinschlüssen kommt, die wiederum die Qualität der Butter beeinträchtigen können. Zum Abfüllen muss sie daher zuvor aufgeschmolzen und danach wieder abgekühlt und durchkristallisiert werden.

Das Aufschmelzen so großer Gebinde ist jedoch schwierig: beispielsweise reicht der Einsatz einer Wärmematte, auf den man den Behälter stellt, nicht, da es auf diese Weise zu einer Trennung von Wasser- und Ölphase kommt. Diese wirken zudem als Isolation: Auf einer flüssigen Phase von beispielsweise 100 kg lastet dann ein Butterklotz mit einem Mehrfachen dieses Gewichtes Gebinde. Auch für einen konventionellen Rührer ist die Masse zu fest.

### STAND DER TECHNIK

CN 112155089 B (INNER MONGOLIA MONRAK FOOD LTD) offenbart eine Butterschmelzvorrichtung, die einen geschlossenen Ölschmelztank, einen geschlossenen Heiztank und eine Druckerhöhungspumpe umfasst. Der Ölschmelztank hat die Vorteile, dass das feste Ghee durch einen Dampf- und Rührerwärmungsmodus des Ölschmelztanks in einen flüssigen Zustand geschmolzen wird, dann wird das flüssige Ghee gleichmäßig und stabil auf 70 Grad Celsius oder mehr durch Fließen des flüssigen Ghees in der Heizspirale erwärmt, und in dem Prozess wird das flüssige Ghee durch zwei Heizstufen erwärmt, so dass die Temperatur des flüssigen Ghees auf 70 Grad Celsius oder mehr erhöht wird.

CN 211985080 U (CHENGDU JINMIDI BIOTECH LTD) betrifft einen Butterschmelztopf. Der Kessel umfasst einen Kesselboden und einen Kesselkörper, wobei der Kesselkörper oberhalb des Kesselbodens angeordnet ist; der Kesselkörper umfasst einen Innenbehälter, der zur Aufnahme von Butter dient. Ein Kohlenstofffaser-Heizdraht ist an der Außenseite des Innenbehälters angeordnet, der Kohlenstofffaser-Heizdraht ist an dem Seitenabschnitt und dem Boden des Innenbehälters in einem gewickelten Modus angeordnet, eine Wärmeschutzschicht und eine Schale sind aufeinanderfolgend an der Außenseite des Kohlenstofffaser-Heizdrahtes angeordnet, eine Stromversorgungskomponente ist an der Kesselbasis angeordnet, und die Stromversorgungskomponente wird verwendet, um elektrische Energie zum Erhitzen des Kesselkörpers bereitzustellen und den Heizzustand des Kesselkörpers zu steuern.

CN 209352830 U (XINHUA JINQIAO XIAMEN EQUIPMENT TECH GROUP CO LTD) beansprucht ein Mikrowellenverflüssigungsgerät mit auf- und absteigender Strahlung. Die Vorrichtung umfasst ein Gehäuse, eine Mikrowellenbestrahlungsbaugruppe, eine Steuerbaugruppe und eine Buttererwärmungskammer, wobei die Mikrowellenbestrahlungsbaugruppe, die Steuerbaugruppe und die Buttererwärmungskammer in dem Gehäuse angeordnet sind.

### AUFGABE DER ERFINDUNG

Daher hat die Aufgabe der vorliegenden Erfindung darin bestanden, ein Verfahren zum Aufschmelzen von Industriebutter in großen Gebinden zur Verfügung zu stellen, mit dem man in kurzen Zeiten und mit geringem technischem Aufwand ein homogenes und flüssiges Produkt erhält.

### BESCHREIBUNG DER ERFINDUNG

Gegenstand der Erfindung ist ein Verfahren zum Aufschmelzen von Butter, umfassend oder bestehend aus den folgenden Schritten:
(a) Bereitstellen von ausgehärteter fester Butter in einem beheizbaren Gebinde
(b) Externes Beheizen des Bodens und/oder des Mantels des Gebindes und
(c) Abpumpen der sich am Boden des Gebindes bildenden flüssigen Phase und deren Rückführung in das Gebinde.

Überraschenderweise wurde gefunden, dass mit den erfindungsgemäßen Verfahren nun feste Industriebutter auch in Gebinden von beispielsweise 1.000 L an Kunden geliefert werden kann, die sich mit geringem Aufwand an Zeit, Personal und Technik zu einer homogenen Flüssigkeit aufschmelzen lassen.

Die Gebinde können aus Metall bestehen, vorzugsweise jedoch aus Kunststoffen, allein schon, um Gewicht zu sparen. Vorzugsweise weisen sie ein Fassungsvermögen von etwa 200 bis etwa 1.500 L, und insbesondere etwa 1.000 L auf, wobei Boden und/oder Mantel - vorzugsweise beide - entweder direkt (beispielsweise durch Dampf) oder indirekt beispielsweise elektrisch beheizt werden können. Die Heizung muss technisch so ausgelegt sein, dass sie die Butter zuverlässig über ihren Schmelzpunkt von mindestens 25 °C und insbesondere mindestens 35 °C. Üblicherweise werden die Gebinde mit der sie enthaltenden Butter auf etwa 40 bis etwa 80 °C erhitzt. Diesen Vorgang führt man durch, bis sich am Boden des Gebindes die flüssige Ölphase bildet, was in der Regel einen Zeitraum 3 bis 6 h in Anspruch nimmt. Wird die flüssige Phase zügig nachgebildet, beginnt man diese vom Boden abzunehmen und mit Hilfe vorzugsweise einer Zirkulationspumpe wieder auf den Kopf des Gebindes aufzugeben. Die Pumpgeschwindigkeit sollte dabei der Geschwindigkeit entsprechen, mit der flüssige Phase nachgebildet wird. Auf diese Weise wird die Butter nicht nur von unten von der Seite her erwärmt, sondern auch von oben. Durch Spalten in den noch festen Anteilen kann die flüssige Butterphase dringen und weiteres Material verflüssigen. In der Regel wird die ganze Schmelzoperation etwa 20 bis etwa 28 h durchgeführt, vielfach erhält man aber schon nach 24 h eine homogene und vollständig verflüssigte Butter, die nun abgepumpt und weiterverarbeitet werden kann.

### BEISPIELE

### Beispiel 1

950 kg feste und durchkristallisierte Industriebutter mit einer Härte von 3,2 N wurden in einem Gebinde mit einem Fassungsvermögen von 1.000 L zur Verfügung gestellt, das über eine elektrische Boden- und Mantelheizung verfügte. Boden und Mantel wurden auf eine Temperatur von 70 °C eingestellt, worauf sich nach etwa 2 h eine flüssige Phase am Boden des Gebindes zu sammeln begann. Nach 5 h wurde begonnen, die flüssige Phase am Boden abzulassen und mit Hilfe einer Zirkulationspumpe kontinuierlich auf den Kopf des Gebindes zurückzuführen. Nach insgesamt 24 h war die gesamte Butter aufgeschmolzen und lag als homogene Phase vor.

### Vergleichsbeispiel V1

950 kg feste und durchkristallisierte Industriebutter mit einer Härte von 3,2 N wurden in einem Gebinde mit einem Fassungsvermögen von 1.000 L zur Verfügung gestellt. Das Gebinde wurde auf eine Wärmematte gestellt und diese auf 70 °C erwärmt. Nach 2 bis 3 Stunden bildete sich am Boden eine flüssige Phase, die ein Volumen von etwa 10 % der Gesamtmenge ausmachte, dass sich auch bei weiterer Erwärmung nicht vergrößerte. Auch nach 24 h war der Großteil der Butter immer noch fest.

## Patentansprüche

**1.** Verfahren zum Aufschmelzen von Butter, umfassend oder bestehend aus den folgenden Schritten:
(a) Bereitstellen von ausgehärteter fester Butter in einem beheizbaren Gebinde
(b) Externes Beheizen des Bodens und/oder des Mantels des Gebindes und
(c) Abpumpen der sich am Boden des Gebindes bildenden flüssigen Phase und deren Rückführung in das Gebinde.

**2.** Verfahren nach Anspruch 1, **dadurch gekennzeichnet, dass** man Industriebutter einer Härte im Bereich von etwa 2 bis etwa 5 N einsetzt.

**3.** Verfahren nach den Ansprüchen 1 und/oder 2, **dadurch gekennzeichnet, dass** man Gebinde mit einem Fassungsvermögen von etwa 200 bis etwa 1.500 L einsetzt.

**4.** Verfahren nach Anspruch 3, **dadurch gekennzeichnet, dass** man Gebinde einsetzt, deren Boden und/oder Mantel direkt oder indirekt beheizt werden kann.

**5.** Verfahren nach mindestens einem der Ansprüche 1 bis 4, **dadurch gekennzeichnet, dass** die Beheizung elektrisch und/oder durch Dampf erfolgt.

**6.** Verfahren nach mindestens einem der Ansprüche 1 bis 5, **dadurch gekennzeichnet, dass** man das Gebinde auf etwa 40 bis etwa 80 °C erhitzt.

**7.** Verfahren nach mindestens einem der Ansprüche 1 bis 5, **dadurch gekennzeichnet, dass** man die Butter zunächst beheizt, bis sich am Boden eine flüssige Phase gebildet hat, diese dann abpumpt und wieder am Kopf des Gebindes aufgibt.

**7.** Verfahren nach Anspruch 6, **dadurch gekennzeichnet, dass** man die Butter zunächst über einen Zeitraum von etwa 3 bis etwa 6 h beheizt.

**9.** Verfahren nach mindestens einem der Ansprüche 1 bis 7, **dadurch gekennzeichnet, dass** man zum Abpumpen und Rückführen der geschmolzenen Butter eine Zirkulationspumpe einsetzt.

**10.** Verfahren nach mindestens einem der Ansprüche 1 bis 8, dass man es über eine Gesamtzeit von etwa 20 bis etwa 28 h durchführt.
